# EUROPÄISCHE PATENTSCHRIFT

(11) **EP 2 361 539 B1**
(45) Veröffentlichungstag und Bekanntmachung des Hinweises auf die Patenterteilung: **08.05.2013**
(21) Anmeldenummer: 11153033.3
(22) Anmeldetag: 02.02.2011
(51) Int. Cl.: A47J 31/42, A47J 42/50

(54) **Kaffeevollautomat mit einer Beladevorrichtung für Kaffeebohnen**
Fully automatic coffee maker with a loading device for coffee beans
Machine à café totalement automatique dotée d'un dispositif de chargement pour grains à café

(30) Priorität: 26.02.2010 DE 102010002437
(43) Veröffentlichungstag der Anmeldung: 31.08.2011
(73) Patentinhaber: BSH Bosch und Siemens Hausgeräte GmbH, 81739 München (DE)
(72) Erfinder: Fuchs, Ralf, 85579, Neubiberg (DE); Mathes, Anton, 83364, Neukirchen am Teisenberg (DE); Schneiderbauer, Gottfried, 84553, Halsbach (DE)

(56) Entgegenhaltungen:
- EP-A1- 2 080 457
- JP-A- 5 337 049
- JP-A- 63 269 952
- US-A- 3 153 377
- US-A1- 2005 139 084

## Beschreibung

Die Erfindung betrifft einen Kaffeevollautomaten für Haushaltszwecke zur Zubereitung kaffeebasierter Heißgetränke, insbesondere einen Einbauvollautomaten, der in einen Aufnahmehohlraum in beispielsweise einer Kuchenzelle einbaubar ist und dort regelmäßig von vier oder gar fünf Seiten mit Möbeln umschlossen ist. Er umfasst im Allgemeinen einen Bohnenbehälter zur Bevorratung von Kaffeebohnen für die Zubereitung von Kaffeegetränken und ein Mahlwerk zum Vermahlen der Bohnen.

Ein derartiges Brühgetränkegerät zeigt die WO 2005/099535 A2. Sie umfasst eine Getrankeeinheit, die während des bestimmungsgemäßen Gebrauchs der Vorrichtung in einem Aufnahmehohlraum beispielsweise eines Küchenmöbels angeordnet ist. Sie befasst sich insbesondere mit Mitteln zum Herausnehmen der Geräteeinheit aus dem Aufnahmehohlraum. Dies ist erforderlich, wenn der Bediener einen Kaffeevorrat in den Bohnenbehälter laden und Frischwasser für die Zubereitung der Brühgetränke in einen Wasserbehälter einfüllen möchte. Diese Behälter sind in der Regel nicht anders zu bedienen, weil sie große Einfüllöffnungen erfordern und am bequemsten von einer Oberseite her befüllt werden. Beides lässt sich an einer senkrechten Gerätefront in der Regel nicht ohne weiteres unterbringen.

Alternativ dazu sind Schubladen oder Servicetüren auf der Frontseite derartiger Geräte bekannt, die jedoch sehr viel Platz erfordern und optisch wenig ansprechend sind.

Die JP 5 337049 A offenbart eine luftstrombasierte Transportvorrichtung für Kaffeebohnen, um die Bohnen von einem Vorratsbehälter mittels Überdruck in eine Vorheizkammer zu transportieren

Auch die US 2005/0139089 A1 offenbart eine luftstrombasierte Transportvorrichtung für Kaffeebohnen.

Aufgabe der Erfindung ist es daher, einen Vollautomaten anzugeben, bei dem das Befüllen des Bohnenbehälter vereinfacht ist.

Diese Aufgabe wird bei dem eingangs genannten Kaffeevollautomaten durch eine Luftstrom basierte Unterdruckeinrichtung als Transportvorrichtung für die Kaffeebohnen in den Bohnenbehälter gelöst. Die Transportvorrichtung erzeugt einen Luftstrom, in den Kaffeebohnen eingebracht werden und der die Bohnen mit sich fortreißt und so in den Bohnenbehälter befördert. Der Luftstrom wird in einer starren oder flexiblen Leitung erzeugt, der zwischen einem Behälter der zu beladenden, unvermahlenen Kaffeebohnen und dem Bohnenbehälter aufgebaut wird. Zum Beladen des Bohnenbehälters ist folglich lediglich die Leitung erforderlich, über die der Luftstrom die Kaffeebohnen beispielsweise aus einer Verkaufsverpackung in den Bohnenbehälter transportiert. Da die Leitung die Kaffeebohnen zu transportieren hat, weist sie dazu einen Querschnitt auf, der mindestens der Größe einer durchschnittlichen Kaffeebohne entspricht. Der Querschnitt und damit das benutzerseitige Ende der Leitung sind jedenfalls aber kleiner als eine herkömmliche Befüllöffnung eines Bohnenbehälters. Die Erfindung verlässt also herkömmliche Konstruktionen, bei denen die Kaffeebohnen die Schwerkraft nutzen und quasi passiv geschüttet werden oder rutschen. Sie verfolgt vielmehr das Prinzip, die Kaffeebohnen aktiv zu transportieren, gegebenenfalls auch entgegen der Schwerkrattrichtung. Der Bohnenbehälter selbst muss folglich nicht mehr frei und großflächig zugänglich sein, um die Bohnen bequem einfüllen zu können. Ein Öffnen von Türen, von Schüben oder ein Ausfahren des vollständigen Einbaugeräts kann damit entfallen. Insbesondere bei Vollautomaten, zum Beispiel Einbaugeräten, die über eine Frischwasserzufuhr und einen Abwasseranschluss verfugen, lasst sich dadurch eine vollständige Bedienung des Einbauvollautomaten allein über die Frontseite des Gerätes bewerkstelligen. Ein Ausfahren des Gerätes ist dann bestenfalls für wesentlich seltenere Service- und Reparaturtätigkeiten erforderlich. Dadurch lässt sich der erfindungsgemäße Vollautomat erheblich einfacher und komfortabler bedienen als herkömmliche Geräte.

Der Luftstrom der Transporteinrichtung zum Befüllen des Bohnenbehälters ist also prinzipiell in eine Richtung von einer einem Bediener zugewandten Frontseite aus in den Bohnenbehälter hinein gerichtet Er kann grundsätzlich durch eine Druckeinrichtung oder durch eine Saugeinrichtung hervorgerufen werden. Der Kaffeevollautomat verfügt über eine Unterdruckeinrichtung als Transportvorrichtung. Sie lässt sich nach dem Staubsauger-Prinzip vorteilhaft im Inneren des Vollautomaten unterbringen. Sie kann einen Motor und ein Lüfterrad umfassen, das je nach Platzverhältnissen als Axial- oder als Radialgebläse wirkt.

Die Unterdruckeinrichtung ist vorteilhafter Weise unmittelbar stromab des zu beladenen Bohnenbehälters angeordnet. Sie kann dann relativ verlustfrei einen Luftstrom in einer Richtung vom Bohnenbehältnis außerhalb des Kaffeevollautomaten in dessen Bohnenbehälter hinein erzeugen. Das Lüfterrad der Unterdruckeinrichtung kann direkt hinter einem Lüfter oder Abschirmgitter angeordnet sein, das es auf geringstem Raum vom Bohnenbehälter abschirmt und über das der Unterdruck auf kürzestem Weg in den Bohnenbehälter gelangt. Damit lässt sich eine kompakte Unterdruckeinrichtung ausbilden, die einen nur geringen Platzbedarf innerhalb des Gehäuses des Kaffeevollautomaten beansprucht.

Der Kaffeevollautomat muss über eine Leitung für die mit Unterdruck angesaugte Luft verfügen, die es dem Benutzer ermöglicht, die Kaffeebohnen einsaugen zu lassen. Der Kaffeevollautomat verfügt über einen flexiblen Ansaugschlauch stromauf des Bohnenbehälters, der von einer Außenseite des Vollautomaten aus zugänglich ist. Die Flexibilität des Schlauchs verleiht ihm eine besondere Bewegungsmöglichkeit, durch die das bedienerseitige Ende des Schlauchs in nahezu jede beliebige und geeignete Betriebsstellung gebracht werden kann. Damit kann der Bediener den Luftstrom bequem in ein Bohnenbehältnis lenken, das im Bereich der Frontseite des Gerätes platziert sein kann und in den Bohnenbehälter des Kaffeevollautomaten entladen werden soll.

Der Ansaugschlauch lässt sich aus dem Automatengehäuse ausziehen. Er kann dadurch aus einer Aufbewahrungsstellung innerhalb des Gerätegehäuses in eine Betriebsstellung außerhalb überführt werden. Die Flexibilität des Ansaugschlauchs kann also vorteilhafter Weise auch dazu dienen, ihn in einer Aufbewahrungsstellung innerhalb des Kaffeevollautomaten so zu verstauen, dass er bequem in eine Betriebsstellung außerhalb des Kaffeevollautomaten überführt werden kann. Dazu ist innerhalb des Kaffeevollautomaten ein Schlauchbehälter angebracht, in dem der Bediener den Ansaugschlauch unterbringen oder in den er auf Anforderung des Bedieners mechanisch eingezogen werden kann. Der Ansaugschlauch ist damit in seiner Aufbewahrungs- bzw. Ruhestellung komfortabel und optisch ansprechend ausgeräumt, ohne bei Nichtbenutzung in seiner Ruhestellung die Bedienung und Optik des Vollautomaten negativ zu beeinträchtigen.

Der Kaffeevollautomat verfügt über eine Schalteinrichtung, die die Transporteinrichtung einschaltet sobald der Ansaugschlauch aus der Aufbewahrungsstellung aus dem Gehäuse bzw. dem Schlauchbehälter ausgezogen wird, und die abschaltet, sobald er in die Aufbewahrungsstellung und damit gegebenenfalls in den Schlauchbehälter eingefahren ist. Die Schalteinrichtung erspart dem Benutzer Bedienungsschritte, nämlich das separate Ein- und Ausschalten der Transportvorrichtung. Dadurch lassen sich der Kaffeevollautomat und insbesondere seine Transportvorrichtung komfortabler bedienen.

Die Schalteinrichtung kann die Transporteinrichtung also in Abhängigkeit von der Betätigung des Ansaugschlauchs ein- bzw. ausschalten. Der Kaffeevollautomat umfasst eine Abschaltautomatik der Transportvorrichtung, die bei einem voll gefüllten Bohnenbehälter aktiviert ist. Sobald also der Bohnenbehälter ein bestimmtes oder sein maximales Fassungsvermögen erreicht hat, schaltet der Kaffeevollautomat die Transporteinrichtung selbsttätig aus, damit keine weiteren Bohnen Richtung Bohnenbehälter transportiert werden. Damit erübrigt sich eine Füllstandsanzeige des Bohnenbehälters, die der Bediener beachten müsste. Dennoch ist eine Überfüllung des Geräts ausgeschlossen. Die Abschaltautomatik kann beispielsweise auf einer Lichtschranke in einem oberen Bereich des Bohnenbehälters beruhen oder auf einem Gewichtssensor, der bei Überschreiten eines Gewichts des Bohnenbehälters anspricht, das seinem gefüllten Zustand entspricht. Die Abschaltautomatik kann ihr Abschaltsignal auch aus der Messung des Motorstroms beziehen, der erheblich ansteigt, wenn das Lüfter- bzw. Abschirmgitter im Bohnenbehälter vollständig durch Bohnen bedeckt ist.

Die Luftstrom basierte Transportvorrichtung kann nicht nur dazu dienen, die Bohnen von extern in den Bohnenbehälter zu transportieren. Sie kann auch zusätzlich oder ausschließlich die Bohnen innerhalb des Kaffeevollautomaten transportieren. Ein Luftstrom basierter Transport der Kaffeebohnen besteht daher zwischen dem Bohnenbehälter und dem Mahlwerk. Bislang erfolgte dieser Transport schwerkraftbasiert, weshalb der Bohnenbehälter regelmäßig oberhalb des Mahlwerks angeordnet war. Erfindungsgemäß kann diese zwingende Anordnung aufgehoben werden, wodurch sich eine größere Konstruktionsfreiheit und ein variablerer Aufbau der Bestandteile des Kaffeevollautomaten ergibt.

Der Kaffeevollautomat verfügt über ein Schauglas stromauf des Mahlwerks, durch das die transportierten Bohnen kurz vor dem Mahlen für den Bediener sichtbar werden. Dadurch kann er nicht nur die Menge, sondern auch die Art bzw. Sorte der Bohnen überprüfen, die ins Mahlwerk gelangen. Dies hat insbesondere dann Bedeutung, wenn der Kaffeevollautomat über mehrere Bohnenbehälter verfügt, die mit unterschiedlichen Sorten an Kaffeebohnen befüllt sind. Das Schauglas ermöglicht es dem Bediener zu überprüfen, ob die von ihm gewählte Bohnensorte tatsächlich auch vermahlen wird. Außerdem kann er anhand des Durchflusses der Bohnen in etwa auch die Bohnenmenge abschätzen, die für sein gewähltes Getränk verarbeitet werden, und damit eine stärkere oder schwächere Brühung vorsehen.

Der Kaffeevollautomat umfasst eine Vereinzelungsvorrichtung für die Bohnen. Sie kann mit dem Schauglas kombiniert sein oder auch separat und für den Bediener unsichtbar, beispielsweise mittels einer Lichtschranke die Anzahl und Größe der transportierten Bohnen ermittelt. Dadurch lässt sich die Dosierung bzw. Mahlmenge korrekt erfassen und die Stärke der Brühung beeinflussen.

Die Transporteinrichtung dient nicht bzw. nicht nur dem Transport der Kaffeebohnen von außerhalb des Bohnenbehälters in ihn hinein und von dort aus weiter in das Mahlwerk, sondern gegebenenfalls auch in der umgekehrten Richtung, also vom Mahlwerk in den Bohnenbehälter. Durch die Umkehrung der Transportrichtung lässt sich die Leitung zwischen dem Bohnenbehälter und dem Mahlwerk entleeren, so dass eine gewählte Dosierung nicht durch Restmengen an Bohnen in der Leitung verfälscht wird. Bei Kaffeevollautomaten mit mehreren Bohnenbehältern stellt sie außerdem sicher, dass tatsächlich nur Bohnen der gewählten Sorte für ein Kaffeegetränk verwendet werden, und der Geschmack des Getränks nicht durch Restmengen einer anderen Bohnensorte beeinträchtigt wird. Sie vermeidet also eine Kreuzkontamination bei Kaffeevollautomaten mit mehreren Vorratsbehältern für unterschiedliche Bohnensorten.

Das Prinzip der Erfindung wird im Folgenden anhand einer Zeichnung beispielshalber noch näher erläutert. In der Zeichnung zeigen:
- Figur 1:: einen erfindungsgemäßen Kaffeevollautomaten in einer Ruhestellung der Transportvorrichtung

- Figur 2:: in einer Betriebsstellung der Transportvorrichtung.

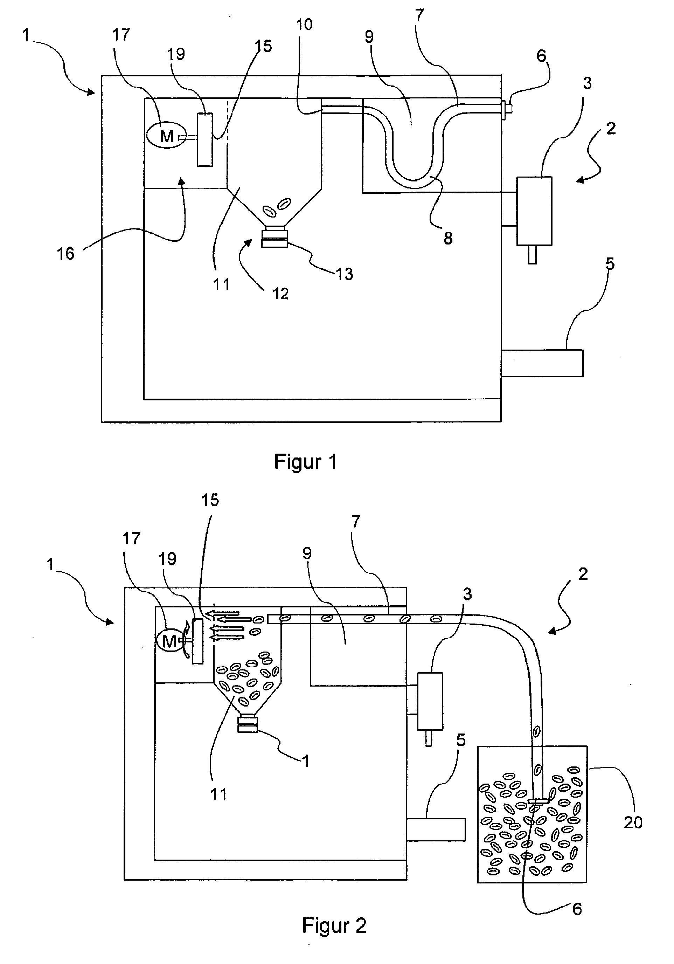

Figur 1 zeigt eine vereinfachte Schnittansicht eines erfinderischen Kaffeevollautomaten durch dessen Gehäuse 1. An einer Gerätevorderseite 2, von der aus der Vollautomat bedient wird, befindet sich ein Getränkeauslass 3 über einer Aufstellfläche 5 für Kaffeetassen oder Ähnliches. In einem oberen Bereich des Gehäuses 1 ist ein Schlauchbehälter 9 angeordnet, in dem ein Schlauch 7 mit einer Schlaufe 8 in einer Aufbewahrungs- bzw. Ruhestellung untergebracht ist. In seiner Ruhestellung mündet der Schlauch 7 an der Vorderseite 2 in einem Griffstück 6, über das er bedient werden kann. Die Schlaufe 8 ermöglicht es, den Schlauch 7 an seinem Griffstück 6 aus dem Behälter 9 herauszuziehen und in eine Betriebsposition zu bringen.

An seinem dem Griffstück 6 gegenüber liegenden hinteren Ende 10 mündet der Schlauch 7 in einen Bohnenbehälter 11, an dessen unteren trichterförmigen Ende 12 ein Mahlwerk 13 anschließt, Auf der dem hinteren Ende 10 des Schlauchs 7 gegenüber liegenden Seite des Bohnenbehälters 11 grenzt er mit einem Lüftungsgitter 15 an einen Ventilator 16 mit einem Motor 17 und einem von diesem angetriebenen Lüfterrad 19 an.

Figur 2 zeigt den Kaffeevollautomaten in derselben Schnittansicht gemäß Figur 1 in einer Betriebsposition der Transportvorrichtung. Der Schlauch 7 ist aus seiner Aufbewahrungsstellung innerhalb des Schlauchbehälters 9 teilweise ausgezogen, soweit es die Schlaufe 8 (Figur 1) erlaubt. Ein Bediener hat ihn in eine Bohnenpackung 20 mit frischen Kaffeebohnen getaucht, um sie in den Bohnenbehälter 11 transportieren zu lassen. Die Entnahme des Schlauchs 7 aus dem Behälter 9 setzt den Ventilator 16 selbsttätig in Gang, so dass er einen Unterdruck im Bohnenbehälter 11 und damit auch im Schlauch 7 erzeugt. Er ist so stark, dass die Bohnen aus der Bohnenpackung 20 durch den Schlauch 7 eingesaugt und in den Bohnenbehälter 11 gespült werden. Dort prallen sie dem Luftstrom folgend gegen das Lüftungsgitter 15. Es ist engmaschig genug, so dass keine Bohnen hindurch gelangen können. Sie sammeln sich daraufhin im trichterförmigen unteren Ende 12 des Bohnenbehälters 11, füllen nach und nach den gesamten Bohnenbehälter 11 und bedecken zunehmend das Lüftungsgitter 15. Um den Unterdruck dennoch aufrecht zu erhalten, muss der Ventilator 16 gegen den Widerstand der Bohnen vor dem Lüftungsgitter 15 einen höheren Unterdruck erzeugen. Der Ventilator 16 braucht dazu mehr Energie, die dem Motor 17 zugeführt wird. Durch Überwachung des Motorstroms wird bei dessen Ansteigen der Ventilator 16 selbsttätig abgestellt, weil dann der Bohnenbehälter 11 ausreichend gefüllt ist. Die versiegende Saugkraft im Schlauch 7 veranlasst den Benutzer den Schlauch 7 wieder in den Schlauchbehälter 9 und damit wieder in seine Ruhestellung zurückzuführen. Damit ist der Befüllvorgang des Bohnenbehälter 11 beendet und der Schlauch 7 verbleibt in seiner Ruhestellung bis eine Signalisierung des Kaffeevollautomaten dem Bediener zu erkennen gibt, dass der Bohnenbehälter 11 erneut in der oben beschriebenen Weise befüllt werden muss.

Die Befüllung des Bohnenbehälters 11 kann also vollständig von der Gerätevorderseite aus erfolgen, von der aus der Bediener die übrige Betätigung des Kaffeevollautomaten gewöhnt ist. Insbesondere muss der Kaffeevollautomat nicht mehr von einer Oberseite aus bedient werden, die in der Regel schwerer zugänglich ist. Für den Einbauvollautomaten ergibt sich daraus ein erheblicher Komfortgewinn, weil der Vollautomat nicht mehr aus seiner Einhausung ausgefahren werden muss.

Insbesondere kann auch die konkrete Ausgestaltung und Anordnung des Schlauchs gegenüber dem Bohnenbehälter und innerhalb des Gehäuses in anderer Form als in der hier beschriebenen folgen. Ebenso kann der Ventilator in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals vorhanden sein können.

### Bezugszeichenliste

| | |
|---|---|
| 1 | Gehäuse |
| 2 | Gehäusevorderseite |
| 3 | Getränkeauslass |
| 5 | Aufstellfläche |
| 6 | Griffstück |
| 7 | Schlauch |
| 8 | Schlaufe |
| 9 | Schlauchbehälter |
| 10 | hinteres Ende des Schlauchs 7 |
| 11 | Bohnenbehälter |
| 12 | trichterförmiges unteres Ende |
| 13 | Mahlwerk |
| 15 | Lüftergitter |
| 16 | Ventilator |
| 17 | Motor |
| 19 | Lüfterrad |
| 20 | Bohnenpackung |

## Patentansprüche

1. Kaffeevollautomat für Haushaltszwecke, insbesondere Einbaukaffeevollautomat, mit einem Bohnenbehälter (11) zur Bevorratung von Kaffeebohnen zur Zubereitung von Kaffeegetränken, **gekennzeichnet durch** eine luftstrombasierte Unterdruckeinrichtung (16) als Transportvorrichtung (16) für Kaffeebohnen um im Betrieb den Bohnenbehälter (11) zu beladen, mit einem aus einem Automatengehäuse (1) ausziehbaren Ansaugschlauch (7) stromauf des Bohnenbehälters (11), der von einer Außenseite (2) des Vollautomaten aus zugänglich ist.

2. Kaffeevollautomat nach Anspruch 1, **gekennzeichnet durch** eine Unterdruckeinrichtung (16) stromab des Bohnenbehalters (11).

3. Kaffeevollautomat nach Anspruch 41 oder 2, **gekennzeichnet durch** eine Schalteinrichtung, die die Unterdruckeinrichtung (16) einschaltet, sobald der Ansaugschlauch (7) aus dem Gehäuse (1) ausgezogen wird.

4. Kaffeevollautomat nach einem der obigen Ansprüche, **gekennzeichnet durch** eine Abschaltautomatik der Transportvorrichtung (16), die bei einem voll gefüllten Bohnenbehälter (11) aktiviert ist.

5. Kaffeevollautomat mit einem Bohnenbehälter (11) und einem Mahlwerk (13) nach einem der obigen Ansprüche, **gekennzeichnet durch** einen luftstrombasierten Transport der Kaffeebohnen zwischen dem Bohnenbehälter (11) und dem Mahlwerk (13).

6. Kaffeevollautomat nach Anspruch 5, **gekennzeichnet durch** eine Vereinzelungsvorrichtung der Bohnen.

7. Kaffeevollautomat nach Anspruch 5 oder 6, **gekennzeichnet durch** einen Transport der Kaffeebohnen vom Mahlwerk (13) zurück in den Bohnenbehälter (11).

## Claims

1. Automatic coffee machine for domestic purposes, particularly a built-in automatic coffee machine, with a beans container (11) for storage of coffee beans for preparation of coffee beverages, **characterised by** a sub-atmospheric pressure device (16), which is based on air flow, as transport device (16) for coffee beans in order, in operation, to load the beans container (11), with a suction hose (7), which is withdrawable from an automatic machine housing (1), upstream of the beans container (11), the hose being accessible from an outer side (2) of the automatic machine.

2. Automatic coffee machine according to claim 1, **characterised by** a sub-atmospheric pressure device (16) downstream of the beans container (11).

3. Automatic coffee machine according to claim 1 or 2, **characterised by** a switching device which switches on the sub-atmospheric pressure device (16) as soon as the suction hose (7) is pulled out of the housing (1).

4. Automatic coffee machine according to any one of the preceding claims, **characterised by** an automatic switch-off system of the transport device (16), which is activated when the beans container (11) is completely full.

5. Automatic coffee machine with a beans container (11) and a grinding mechanism (13) according to any one of the preceding claims, **characterised by** a transport, which is based on air flow, of the coffee beams between the beans container (11) and the grinding mechanism (13).

6. Automatic coffee machine according to claim 5, **characterised by** a singling device for the beans.

7. Automatic coffee machine according to claim 5 or 6, **characterised by** a transport of the coffee beans from the grinding mechanism (13) back into the beans container (11).

## Revendications

1. Machine à café entièrement automatique à usage domestique, en particulier machine à café entièrement automatique intégrée, dotée d'un réservoir à grains (11) destiné à l'approvisionnement de grains de café pour la préparation de boissons à base de café, **caractérisée par** un dispositif de dépression (16) par flux d'air servant de dispositif de transport (16) de grains de café pour charger le réservoir à grains (11) pendant le fonctionnement, avec un flexible d'aspiration (7) en amont du réservoir à grains (11) que l'on peut sortir d'un carter (1) de machine et qui est accessible depuis une face extérieure (2) de la machine entièrement automatique.

2. Machine à café entièrement automatique selon la revendication 1, **caractérisée par** un dispositif de dépression (16) en aval du réservoir à grains (11).

3. Machine à café entièrement automatique selon la revendication 1 ou 2, **caractérisée par** un dispositif de commutation qui connecte le dispositif de dépression (16) dès que l'on sort le flexible d'aspiration (7) du carter (1).

4. Machine à café entièrement automatique selon l'une des revendications précédentes, **caractérisée par** un système automatique de coupure du dispositif de transport (16), qui est activé lorsque le réservoir à grains (11) est rempli complètement.

5. Machine à café entièrement automatique comprenant un réservoir à grains (11) et un broyeur (13) selon l'une des revendications précédentes, **caractérisée par** un transport par flux d'air des grains de café entre le réservoir à grains (11) et le broyeur (13).

6. Machine à café entièrement automatique selon la revendication 5, **caractérisée par** un dispositif de séparation des grains.

7. Machine à café entièrement automatique selon la revendication 5 ou 6, **caractérisée par** un renvoi des grains de café du broyeur (13) dans le réservoir à grains (11).
